# FASCICULE DE BREVET EUROPEEN

(11) **EP 0 848 741 B1**
(45) Date de publication et mention de la délivrance du brevet: **22.05.2002**
(21) Numéro de dépôt: 95924310.6
(22) Date de dépôt: 22.06.1995
(51) Int. Cl.: C10B 53/00, C10J 3/02

(54) **PROCEDE POUR TRAITER LES DECHETS CONTENANT DES POLYMERES, TELS QUE LES PNEUS**
VERFARHEN ZUR BEHANDLUNG VON POLYMERE ENTHALTENDEN ABFÄLLEN, WIE REIFEN
METHOD FOR PROCESSING POLYMER-CONTAINING WASTE, e.g. TYRES

(43) Date de publication de la demande: 24.06.1998
(73) Titulaire: ENVIROTEC GROUP LIMITED, Douglas Isle of Man (GB)
(72) Inventeur: MANELIS, Georgi, Moskovskaya obl., 142432 (RU); POLIANTCHIK, Evgeni, Moskovskaya obl., 142432 (RU); RAFEEV, Vladimir, Moskovskaya obl., 142432 (RU); IOUDANOV, Alexandr, Moskovskaya obl., 142432 (RU); TCHEREMISINE, Viatcheslav, Moskovskaya obl., 142432 (RU); TCHERVONNY, Alexandr, Moskovskaya obl., 142432 (RU); FOURSOV, Viktor, Moskovskaya obl., 142432 (RU); ALKOV, Nikolai, Moscou, 115573 (RU)
(74) Mandataire: Pontet, Bernard
(86) Numéro de dépôt international: EP9502415
(87) Numéro de publication internationale: WO9600265

(56) Documents cités:
- WO-A-85/00834
- WO-A-90/07085
- WO-A-92/01767
- US-A- 5 488 477

## Description

La présente invention concerne un procédé pour le traitement des déchets combustibles tels que les pneus usés et les rebus de polymères analogues, qui contiennent de la gomme, en pyrolysant la partie polymère des pneus de façon à produire du gaz combustible et des produits résultant de la pyrolyse des hydrocarbures. Ce procédé peut être employé pour traiter et éliminer écologiquement les pneus usagés accumulés et les déchets polymères analogues.

L'accumulation annuelle de pneus usagés dans le monde entier excède 200 millions. Ils sont produits en quantités croissantes, alors qu'il n'existe aucune méthode économique et écologique pour leur élimination ou leur traitement. Seule une petite fraction des pneus usagés est rénovée, ou transformée en gomme secondaire par broyage ou par des technologies de dissolution. La combustion directe des pneus est en général dangereuse pour l'environnement.

Les pneus usagés s'accumulent en grandes quantités dans des décharges, aggravant ainsi les futurs problèmes d'environnement, ou bien sont directement incinérés. De plus, les pneus usagés contiennent un certain nombre de composants de valeur et les pneus pourraient servir de stock de ces matériaux, une fois séparés. Ainsi le retraitement des déchets de polymères, incluant les pneus usés, est un problème important.

On connaît de nombreux procédés pour produire des huiles de pyrolyse à partir de gommes, y compris les pneus, par décomposition thermique de ceux-ci. Les procédés diffèrent par la façon dont la chaleur est appliquée aux pneus usés, par l'utilisation de catalyseurs de dévulcanisation, par l'introduction d'oxygène pour la distillation oxydative, par les conditions imposées quant à la taille des morceaux utilisés dans le traitement, par les moyens pour charger les pneus et décharger les produits, et par les régimes de température du processus.

Les US-A-3 823 233 et US-A-4 740 270 divulguent des procédés de distillation ayant une faible productivité et un faible rendement énergétique, requérant l'un et l'autre une source externe d'énergie ou de consommer du gaz produit dans le processus. De plus, ces procédés produisent habituellement de grandes quantités de noir de carbone de basse qualité dénué de valeur commerciale.

On connaît encore les procédés qui impliquent la combustion et la gazéification successive, couche par couche, de combustibles organiques solides dans des fours verticaux, dans un contre-courant de gaz oxydant. Par exemple, des mises en oeuvre particulières de ces procédés sont connues d'après les US-A-2 796 390 et US-A-2 798 032 concernant le traitement des schistes bitumineux. On décrit ci-après le principe général de la gazéification de combustibles organiques solides soumis à un contre-courant.

Un agent gazéifiant contenant de l'oxygène et optionnellement de l'eau et/ou du dioxyde de carbone entre dans la zone de combustion, où l'oxygène réagit avec le combustible charbonneux solide (incinération) à des températures typiquement comprises entre 900 et 1500°C. L'agent gazéifiant est introduit dans le réacteur à contre-courant du combustible organique solide de manière que le gaz oxydant passe au moins partiellement à travers une couche de produits incombustibles solides de la gazéification (cendres). Ceci donne une zone où le gaz oxydant est préchauffé et la cendre est refroidie avant son déchargement.

L'oxygène est totalement consommé dans la zone de combustion et des gaz chauds produits par la combustion (incluant du dioxyde de carbone et de l'eau) passent à travers une autre couche de combustible solide dans laquelle s'établit une zone de réduction, où l'eau et le dioxyde de carbone réagissent avec le combustible carboné, produisant des gaz combustibles. La chaleur des gaz de combustion chauds est partiellement consommée dans ces réactions de réduction. La température du gaz diminue lorsqu'il passe à travers le combustible solide et transfère à ce dernier sa chaleur sensible. Le combustible organique chauffé par le flux de gaz est pyrolysé, produisant du carbone, des goudrons, des huiles, et des gaz combustibles.

Le gaz produit est dirigé à travers le combustible nouvellement chargé dans le but de refroidir ce gaz et de préchauffer et sécher le combustible. Finalement, le gaz produit (contenant des vapeurs acqueuses et hydrocarbures, des huiles et des goudrons) est prélevé pour une utilisation ultérieure.

Les pneus se rangent dans la classe des combustibles organiques solides pouvant être traités en utilisant ces techniques. Les pneus et déchets apparentés présentent les caractéristiques suivantes dont il faut tenir compte :
. Ils ont une caractéristique de forme et de taille, renferment habituellement des câbles métalliques,
. des morceaux de pneus peuvent partiellement fondre à des températures de 150 à 400°C et s'agglomérer, et
. ils contiennent des additifs caractéristiques, à savoir, de l'oxyde de zinc qui peut avoir une valeur commerciale comme produit du traitement, et du soufre qui est un polluant des produits finaux.

La propension des pneus à s'agglomérer est une difficulté majeure dans le traitement par pyrolyse parce qu'elle tend à interrompre le flux de gaz à travers le réacteur et la descente de la charge de pneus.

On connaît quelques procédés basés sur la combustion partielle des matières organiques solides des pneus.

Une solution particulière à ce problème est proposée dans le US-A-4 732 091, selon lequel le combustible (pouvant consister en des pneus) est chargé dans la partie supérieure d'un four vertical. De là, la charge combustible se déplace à un rythme commandé par un système de grilles mobiles horizontales à travers une succession de chambres où sa pyrolyse puis sa combustion sont réalisées dans un contre-courant d'agent gazéifiant air-vapeur. Ce procédé permet de gazéifier des pneus, les grilles ayant pour but de désagglomérer la charge pendant le traitement, assurant ainsi sa perméabilité aux gaz. Les grilles permettent aussi de maîtriser le rythme auquel la charge passe dans les zones ou les chambres successives. Le principal problème de ce procédé réside dans la présence des grilles mobiles. Dans les zones de haute température les grilles mobiles vont inévitablement s'user rapidement. A part cela, les particules de poussières et de goudrons vont se déposer sur les structures mobiles du réacteur, gênant ainsi son bon fonctionnement. Le gaz produit sort du réacteur à une température autour de 430-540°C. La température de la zone de combustion s'établit entre 870 et 930°C. Ce procédé procure une haute température de combustion, et, dès lors, une valeur calorifique élevée du gaz produit. En même temps, la température à la sortie du réacteur est élevée.

Cela peut être avantageux pour traiter certains déchets qui donnent très peu ou pas du tout d'huiles condensables, mais si l'objectif est de produire des huiles de pyrolyse, ce traitement les produit sous une forme difficile à manipuler. Il est en effet difficile de refroidir davantage le gaz produit car les hydrocarbures insaturés se polymérisent à des températures supérieures à 300°C, et forment alors des dépôts dans les conduits.

Le WO-A-92/01 767 enseigne de pyrolyser dans un réacteur de combustion vertical à contre-courant, des pneus usés déchiquetés en fragments de taille comprise entre 12 et 50 mm. La pyrolyse est réalisée par la combustion partielle du résidu carboné de la pyrolyse. L'huile de pyrolyse est censée servir d'agent plastifiant pour les composés caoutchoutés. L'oxydant est introduit dans la zone de combustion en quantité substoechiométrique, pour maintenir en-dessous de 270°C la température des gaz de combustion se dégageant de la zone de combustion. Cela produit du gaz sortant à une température inférieure à 170°C. Ainsi, on recueille du produit gazeux à basse température, mais au prix d'une production conjointe de noir de carbone de basse qualité, et, en raison de la basse température de pyrolyse, au prix d'une cadence de traitement très lente.

Le US-A-4 588 477 enseigne d'établir un lit fluidisé à partir des pneus déchiquetés en morceaux de 25 mm et moins, mélangés avec des matériaux solides incombustibles sous la forme de pièces de 18 à 25 mm de dimension maximale, au sein d'un contre-courant d'agent gazéifiant. L'introduction de matériaux solides incombustibles s'oppose à l'agglomération des pièces et favorise l'échange de chaleur gaz solide, tout en assurant la descente régulière du mélange à l'intérieur du réacteur. Ce traitement nécessite d'introduire du gaz combustible additionnel dans la zone de combustion et dépend essentiellement de la taille des particules pour obtenir le lit fluidisé. Ce traitement, bien que sa haute température de combustion (1100°C) conduise à la production de gaz hautement calorifique avec une forte productivité, produit cependant du gaz à haute température ; par conséquent, la condensation ultérieure des huiles produites pose un problème difficile ; de plus, à haute température, les huiles de pyrolyse peuvent polymériser dans les tuyaux. Et la nécessité de déchiqueter les pneus en petits morceaux capables de créer le lit fluidisé est un inconvénient.

Le but de la présente invention est de réaliser la pyrolyse de relativement grands morceaux de pneus usés sans avoir besoin de sources de chaleur externes, avec un débit élevé, une grande production de produits de valeur, incluant des huiles de pyrolyse, et un rendement énergétique élevé.

Suivant l'invention, le procédé pour traiter des déchets combustibles comme des pneus usagés, ou déchets caoutchoutés analogues qui sont au moins en partie constitués de matériaux combustibles, comprenant :
- introduction dans un réacteur d'une charge qui est au moins en partie constituée de morceaux de déchets combustibles et de matériaux incombustibles, dans le but de pyrolyser et de gazéifier les déchets combustibles ;
- établissement d'un flux de gaz à travers la charge en injectant à l'intérieur du réacteur, par le côté des produits solides du traitement, un agent gazéifiant contenant de l'oxygène et en retirant du réacteur, par le côté où se trouvent les déchets non encore traités, les produits de traitement liquides et gazeux ;
- réacteur à l'intérieur duquel des tronçons successifs de la charge entrent successivement dans des zones de chauffage, de pyrolyse, de cokéfaction, de combustion, et de refroidissement ;
- soutirer du réacteur les produits solides du traitement ;
procédé dans lequel on régule la température maximale dans le réacteur par ajustement d'au moins un paramètre sélectionné parmi : le débit d'alimentation en agent gazéifiant, le rapport de masse entre le débit d'alimentation de l'agent gazéifiant et la consommation de la charge, la composition de l'agent gazéifiant, et la composition de la charge, est caractérisé en ce la masse des incombustibles dans la charge entrante est réglée entre 2 et 80 % en masse, le rapport de masse entre la consommation d'agent gazéifiant par rapport à la consommation de la charge est réglé entre 0,3 et 5,0, et en ce que ledit ajustement d'au moins un paramètre se fait dans le sens de maintenir la température maximale dans le réacteur entre 800 et 1700°C tout en maintenant la température des produits gazeux à la sortie du réacteur en-dessous de 300°C ; de préférence en-dessous de 250°C.

Il s'est avéré possible, en effet, de combiner la température maximale relativement élevée dans le réacteur avec une sortie du gaz produit à relativement basse température.

La température maximale possible obtenue avec le traitement selon l'invention peut être déterminée par évaluation thermodynamique et est normalement trop élevée si des matériaux économiquement abordables sont utilisés pour la construction des structures du réacteur. Le réglage des paramètres mentionnés ci-dessus permet d'atténuer la température maximale dans le réacteur. Par exemple, des débits d'introduction lents réduiront normalement la température maximale en augmentant la proportion des pertes de chaleur.

De même, l'ajout de matériaux incombustibles à la charge contribue au préchauffage de l'agent gazéifiant et ainsi à l'augmentation de la température de combustion, mais au-delà d'une certaine quantité ou d'une certaine proportion de matériaux incombustibles, cette quantité diminuera la température de combustion. Les plages à l'intérieur desquelles les paramètres doivent être réglés peuvent être déterminées expérimentalement dans chaque cas, en fonction de la taille du réacteur, de sa forme, de sa perméabilité à la chaleur, de la nature des déchets, etc...

La relativement basse température du gaz produit peut être un effet de la longueur du trajet du gaz produit à travers la charge entrante. Une telle basse température du gaz produit offre à la fois l'avantage d'une meilleure efficacité calorifique du procédé, et l'avantage d'éliminer les problèmes considérés ci-dessus qui apparaissent lorsque la température du gaz produit est plus élevée.

Comme le gaz produit se refroidit en traversant la charge non encore pyrolysée, les composés condensables dans le gaz produit ont tendance à se condenser dans la charge, de sorte que ces composés condensables seront remis en circulation pour être pyrolysés davantage dans la zone de pyrolyse, donnant dans le gaz produit des composants plus légers et moins condensables.

De préférence, les pneus sont réduits en morceaux d'une taille entre 25 et 300 mm. Ces morceaux ou, de façon optionnelle, un mélange de ces morceaux avec des matériaux incombustibles solides sous la forme de fragments d'une taille supérieure à 20 mm, sont chargés à l'intérieur du réacteur. Dans le réacteur, les morceaux sont appuyés les uns contre les autres, par exemple sous leur propre poids, contrairement aux procédés antérieurs utilisant la technologie du lit fluidisé ou des grilles. Pour être plus sûr que la charge est perméable aux gaz, on peut introduire les matériaux incombustibles solides sous la forme de morceaux ou d'objets percés, par exemple sous la forme de cylindres tubulaires. Les morceaux de pneus et les matériaux incombustibles solides peuvent être chargés séparément à l'intérieur du réacteur pour être ensuite mélangés dans celui-ci, ou chargés sous la forme d'un mélange pré-constitué. On règle entre 2 et 80% en masse la proportion des incombustibles dans cette charge. Comme la fragmentation des pneus est relativement difficile, il peut être avantageux d'utiliser des morceaux d'au moins 100 mm, et même d'au moins 200 mm. Des morceaux de matériaux incombustibles de relativement grande taille, d'au moins 100 mm ou même d'au moins environ 200 mm peuvent également être préférés. Il a été trouvé que lorsqu'il fond, le caoutchouc tend à adhérer à de tels morceaux incombustibles non-fusibles, en laissant un passage pour les gaz entre les morceaux.

Dans le réacteur, dans un flux d'agent gazéifiant contenant de l'oxygène passant à contre-courant à travers la charge, les combustibles de la charge sont pyrolysés et gazéifiés. L'agent gazéifiant peut être de l'air, enrichi en oxygène ou, pour accroître la valeur calorifique du gaz produit, un agent gazéifiant contenant aussi de l'eau et/ou du dioxyde de carbone. Le ou les agents gazéifiants sont introduits dans la section du réacteur où se déposent les produits solides du traitement de façon que le flux de gaz traverse une couche de ces produits. L'agent gazéifiant, ou ses constituants particuliers, sont introduits soit en mode réparti, soit dans une zone localisée. En particulier, l'eau (liquide ou vapeur), le dioxyde de carbone, et l'oxygène (de l'air) peuvent être introduits par des entrées séparées.

Les pneus chargés entrent dans une zone de préchauffage, où la charge est chauffée à 300°C par échange de chaleur avec le contre-courant de gaz produit. L'expression "gaz produit" désigne un mélange contenant des vapeurs et des gouttelettes d'huiles de pyrolyse en suspension et des gaz de combustion et de gazéification, notamment du monoxyde de carbone, du dioxyde de carbone, de l'eau, de l'hydrogène, du méthane, de l'éthylène, du propane, etc... Le gaz produit est retiré du réacteur dans cette zone.

La charge entre par la suite dans la zone de pyrolyse, où elle est chauffée entre 300 à 500°C par échange de chaleur avec le flux de gaz, et les combustibles des pneus pyrolysent, produisant des résidus carbonés et libérant des produits volatiles à l'intérieur du gaz.

Par la suite la charge entre dans la zone de cokéfaction, où se produit, entre 500°C et 800°C, la cokéfaction des résidus carbonés de la pyrolyse, produisant du charbon.

La charge contenant du charbon entre par la suite dans la zone de combustion oxydation où, de 800°C jusqu'à 1700°C, le charbon réagit avec l'agent gazéifiant chauffé, produisant du gaz combustible et des résidus solides. Finalement le résidu solide entre dans la zone de refroidissement, où il refroidit jusqu'à la température de déchargement en cédant de la chaleur à l'agent de gazéification entrant à contre-courant dans le réacteur.

La classification des zones mentionnées ci-dessus est dans une certaine mesure arbitraire, et ces zones peuvent être définies d'une manière différente, par exemple selon la température du gaz, la composition et l'état des réactants, etc... En tout cas, un point important est que grâce à la circulation des gaz et des solides à contre-courant, l'agent de gazéification (le gaz oxydant) est préchauffé par les résidus solides de la combustion, et ensuite les produits gazeux chauds de la combustion et de la gazéification cèdent leur chaleur à la charge initiale.

Il doit être noté que le flux à contre-courant n'implique pas nécessairement un déplacement de la charge. En particulier, le traitement peut être exécuté en mode continu, en opérant en continu ou par intermittences le chargement des pneus dans le réacteur et le déchargement des résidus solides à mesure que la charge est consommée dans le traitement. Dans ce cas particulier, en effet, la charge sous traitement se déplace réellement à contre-courant du flux de gaz. Alternativement, le même traitement peut être mis en oeuvre en lit fixé, avec le réacteur chargé et déchargé par fournées pendant des périodes d'arrêt. Dans ce cas, la succession de zones se déplace le long de la charge et les morceaux de pneus entrent dans une zone correspondante lorsque la zone arrive à une région particulière du réacteur. Ce traitement en lit fixé peut être réalisé dans un four vertical avec le flux de gaz dirigé vers le haut ou bien vers le bas. L'exécution de ce procédé par fournées nécessite normalement un réacteur vertical plus long. Il est alors avantageux que la charge contienne une plus grande proportion de matériaux incombustibles à côté de la sortie pour le gaz produit, de façon à éviter le traitement incomplet d'une partie des déchets à la fin de chaque fournée.

Finalement, le résidu solide est déchargé du réacteur. Ce résidu peut être traité (par exemple, sur un crible), et les morceaux récupérés réutilisés comme matériaux incombustibles solides. Cela s'applique à la réutilisation des câbles métalliques comme additif solide aussi bien qu'aux objets, comme les matériaux tubulaires incombustibles, qui avaient été ajoutés aux déchets.

Le débit d'introduction d'agent gazéifiant et le rapport de masse entre la consommation d'agent gazéifiant par rapport à la consommation de la charge de pneus (consommation d'ensemble, les incombustibles inclus) est réglé entre 0,3 et 5,0, de préférence autour de 0,4 à 0,7, de manière à garder la température maximale dans le réacteur (dans la zone de combustion) entre 800 et 1700°C, de préférence entre 1000 et 1.200°C, tout en gardant la température du gaz produit à la sortie du réacteur en-dessous de 250°C.

Dans le but de maîtriser les températures, le rapport de masse, de la consommation d'agent gazéifiant par rapport à la consommation de la charge de pneus est diminué et/ou le débit d'introduction d'agent gazéifiant est diminué, quand la température du gaz produit à la sortie du réacteur excède les limites prescrites.

Quand la température de combustion tombe en-dessous des limites prescrites, on augmente le débit d'introduction d'agent gazéifiant et/ou le rapport des consommations. Si la température de combustion excède le niveau prescrit, le débit d'introduction de gaz oxydant est diminué et/ou le rapport des consommations est diminué. Le rapport de consommation peut être réglé directement en ajustant le débit d'alimentation du flux correspondant et aussi indirectement, en agissant sur la composition de l'agent gazéifiant (en le rendant plus riche ou plus pauvre en oxygène, en ajoutant de l'eau et/ou du dioxyde de carbone, etc...) et aussi en agissant sur la composition de la charge à traiter. Ce dernier réglage implique qu'en plus des incombustibles déjà présents dans les pneus (par exemple, des câbles métalliques, de l'oxyde de zinc, des charges minérales, etc...) l'on puisse ajouter à la charge un matériau incombustible solide, et réguler ainsi la teneur en incombustibles dans la charge dans les limites mentionnées ci-dessous.

Le rapport des consommations constitue le paramètre de base pour réaliser le traitement de façon optimale. En effet, le traitement optimisé doit répondre (quand cela est possible simultanément) aux critères suivant :
(a) rendement énergétique élevé,
(b) cadence de traitement élevée,
(c) haute valeur calorifique du gaz produit,
(d) basse température du gaz produit,
(e) basse température des résidus solides,
(f) grande production d'huile de pyrolyse, et
(g) prédominance d'hydrocarbures légers dans l'huile.

L'on peut voir que les critères (a) et (c à e) sont concordants. En effet, si le rendement énergétique est élevé, cela signifie que la teneur en énergie donnée au gaz produit est accrue de manière correspondante et la chaleur sensible des produits déchargés est diminuée de manière correspondante. Les basses températures des produits facilitent leur manipulation. En même temps, les critères (a à c) sont simultanément satisfaits quand la température du traitement est élevée, c'est-à-dire quand la vitesse de réaction dans la zone de combustion est élevée et quand les équilibres chimiques dans les zones de haute température sont déplacés dans le sens de la formation de gaz combustibles (typiquement au-dessus de 1000°C, la température maximale étant limitée par le risque de fusion des structures du réacteur et/ou des solides à l'intérieur du réacteur).

Les critères (d) et (g) sont aussi en accord, car à basse température dans la zone de chauffage, les hydrocarbures lourds ont tendance à se condenser directement sur la charge à l'intérieur du réacteur et à y subir des craquages répétés.

Le critère (f) est dans une certaine mesure en contradiction avec (b), de sorte que la cadence de traitement ne peut être accélérée qu'au prix d'une moindre production d'huiles.

Ainsi, à la base, le problème est de parvenir à combiner la haute température de combustion avec les basses températures des produits. Une réponse partielle est apportée par le mode en contre-courant lui-même, puisqu'il assure un échange de chaleur entre les produits en leur permettant de céder une partie essentielle de leur chaleur sensible avant d'être retirés du réacteur. Néanmoins, le problème n'est en aucun cas résolu par les antériorités. Le point est que les paramètres sur lesquels l'invention prévoit d'agir, à savoir le débit d'introduction du gaz oxydant et la consommation de la charge, ne permettent pas d'optimiser le traitement, selon les critères mentionnés ci-dessus, s'ils sont régulés un par un et non pas de façon concertée.

On peut comprendre pourquoi les paramètres mentionnés ci-dessus se combinent en un rapport constituant une valeur essentielle. En effet, ce rapport régit de manière prépondérante l'échange de chaleur entre le flux de gaz et la charge et, ainsi, le transfert de la chaleur sensible du flux de gaz à la charge. Quand ce rapport dépasse sensiblement l'unité, la chaleur du flux de gaz ne peut être reçue par la charge et le gaz produit se dégage à relativement haute température. De la même manière, quand le rapport est bas, l'échange de chaleur permet de parfaitement récupérer la chaleur du flux gazeux, mais en même temps, la chaleur du résidu solide ne peut être reçue par le flux de l'agent gazéifiant. Ainsi, seul le réglage concerté des deux consommations permet d'optimiser le traitement.

En particulier, si l'on règle indépendamment l'une de l'autre ces consommations de la charge de pneus et de l'agent de gazéification la teneur en noir de carbone résiduel dans le résidu solide varie. Si l'on désire à la fois produire de l'oxyde de zinc sans carbone et récupérer complètement la teneur calorifique du carbone, alors les consommations en oxygène et en carbone doivent être concertées de manière stoechiométrique, et ce rapport de masse des consommations est réalisé en régulant la composition de la charge et celle de l'agent de gazéification.

L'effet du débit d'alimentation absolu de l'agent de gazéification est le suivant : plus le débit d'alimentation est grand, plus élevée sera la température maximale de combustion. Ceci est dû à deux raisons. La première est l'action relative des pertes de chaleur dans l'équilibre énergétique global (les pertes de chaleur deviennent relativement faibles lorsque la cadence de traitement est rapide). La seconde se rapporte aux limitations cinétiques des réactions endothermiques dans les zones de combustion. Mais en même temps, l'augmentation du débit d'introduction du gaz d'oxydation (les autres paramètres étant fixés) fait augmenter la température du gaz produit, parce que cela nuit à l'efficacité des échanges thermique entre le gaz produit et la charge.

Le gaz produit retiré du réacteur est utilisé avec les méthodes connues, par exemple, l'huile de pyrolyse condensée sert de stock d'hydrocarbures et sa part non condensée de gaz combustible.

Le dioxyde de carbone et l'eau récupérés du gaz produit au cours de son traitement, peuvent être réutilisés comme composants de l'agent de gazéification. En particulier, l'eau contaminée séparée de l'huile de pyrolyse peut être injectée dans la zone de combustion ou dans la zone de refroidissement où la température est assez élevée (plus de 400°C pour les solides), et où règne un environnement oxydant, pour craquer la matière organique dissoute dans l'eau. Ce mode d'introduction d'eau fournit aussi un moyen supplémentaire pour faire varier de façon urgente la température maximale du réacteur, dans le cas où la température excéderait les limites prescrites.

Dans le but d'agir sur la teneur en soufre (ou en chlore) dans le gaz produit, on peut aussi introduire dans les matériaux solides incombustibles chargés un composant (par exemple, du calcaire ou de la dolomie), qui réagit chimiquement avec les substances contenant du soufre pour produire des composés qui sont retirés par la suite avec les résidus solides.

La présente invention, contrairement à celles connues, procure un procédé efficace pour traiter directement par pyrolyse les déchets de pneus réduits en gros morceaux (ainsi les dépenses pour déchiqueter les pneus sont peu élevées, la charge a une bonne perméabilité au gaz et les pertes hydrodynamiques sont faibles) en utilisant seulement la chaleur des gaz chauds se dégageant de la zone de combustion avec une forte production d'huiles de pyrolyse (supérieure à 55%) et un bon rendement. L'énergie consommée lors du traitement est fournie par la combustion d'au moins une partie du noir de carbone qui est présent dans la gomme et qui est produit lors de la pyrolyse. Grâce à la basse température à laquelle sort le gaz produit, les huiles lourdes de moindre valeur sont piégées dans le réacteur car elles se condensent dans la zone de chauffage et retournent avec la charge pour un craquage supplémentaire. La basse température du gaz produit facilite l'opération ultérieure de condensation des huiles de pyrolyse, et empêche la polymérisation des huiles insaturées dans les tuyaux. En même temps, la forte température de combustion procure une haute valeur calorifique au gaz produit non condensable, une cadence rapide de traitement, et un rendement élevé.

D'autres caractéristiques et avantages de l'invention ressortiront encore de la description suivante, en référence à des exemples non limitatifs.

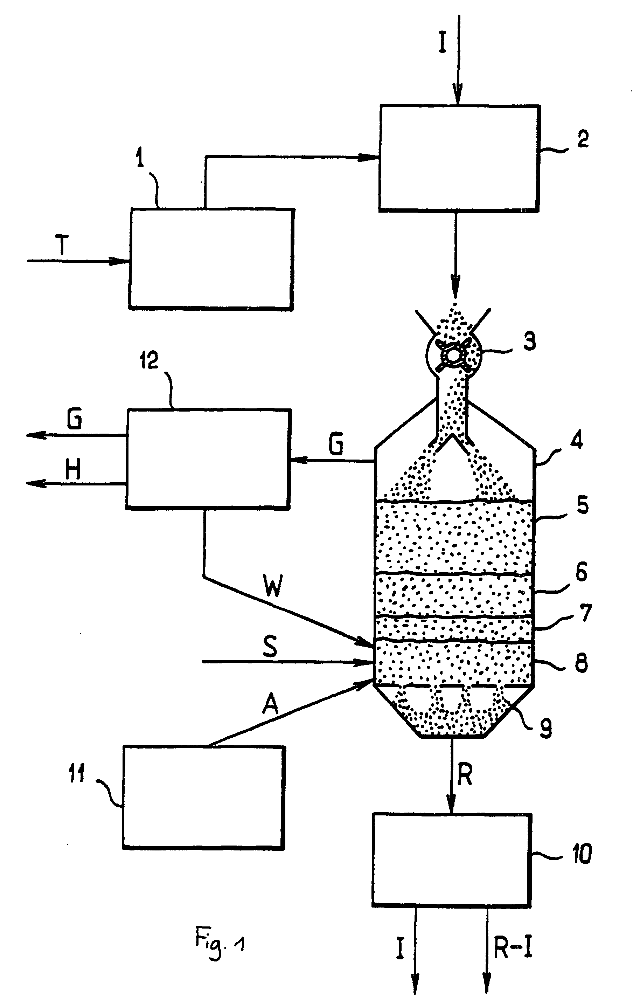

La figure 1 est une vue schématique d'une application possible du procédé.

Les pneus "T" sont fragmentés dans un concasseur 1, sont mélangés par la suite avec le matériau "I" non fusible solide incombustible dans un mélangeur 2, et ensuite chargés au sommet d'un réacteur vertical 4 par un sas à air d'admission 3.

Dans le réacteur 4, la charge traverse successivement les zones de chauffage 5, de pyrolyse 6, de combustion 7, et de refroidissement 8. Le résidu solide de combustion "R" est continuellement déchargé de la base du réacteur par un sas à air 9 de sortie, à un débit qui est réglé de façon à stabiliser la zone de combustion à une certaine distance au-dessus de la base du réacteur. L'ensemble de la charge forme sur toute la hauteur du réacteur une unique colonne dans laquelle les morceaux constituant la charge sont appuyés les uns sur les autres par leur propre poids et d'une manière plus générale chaque région de la hauteur de cette colonne supporte à l'encontre de la gravité tous les matériaux de la colonne situés au-dessus, selon la technologie du lit stationnaire, bien que le lit se déplace vers le bas pendant le traitement.

Le résidu solide est fractionné sur un tamis 10, et une partie de celui-ci, à savoir des cylindres tubulaires introduits pour désagglomérer la charge, est recyclée comme additif solide et on dirige les autres parties en vue d'en disposer de manière appropriée. On procède en particulier à la séparation des câbles métalliques et de la poudre d'oxyde de zinc. De l'air "A" est introduit par un compresseur 11 dans la partie basse du réacteur. De la vapeur "S" est également injectée à ce niveau par une ouverture séparée. Le gaz produit "G" est extrait de la partie supérieure du réacteur et dirigé vers un condenseur 12. Dans celui-ci, les liquides condensables sont séparés du gaz, l'eau contaminée "W" retourne dans la zone de refroidissement pour incinérer les polluants organiques dissouts et l'huile hydrocarbonée de pyrolyse "H" est envoyée vers une utilisation ultérieure ou un stockage. Le gaz non condensable produit est envoyé vers une utilisation consécutive, qui peut comprendre sa purification ultérieure et finalement sa combustion dans une chaudière ou charge thermique analogue. Les températures dans les zones respectives sont contrôlées de façon continue et des ajustements respectifs des paramètres de commande sont réalisés chaque fois que ces températures s'écartent des limites optimales prescrites.

L'invention est encore illustrée par les exemples suivants :
1°) On a chargé dans un réacteur de laboratoire un mélange de pneus d'automobiles, coupés en morceaux ayant une taille de 3 à 5 cm, avec des morceaux de briques réfractaires de la même taille. La composition du mélange était dans un rapport de masse de 1:1.
   L'air a été utilisé comme agent de gazéification. La consommation d'air a été de 930 N.m³/h par m² de section transversale du réacteur. La cadence de traitement des pneus a été de 350 kg/h par m² de section transversale du réacteur. La température du gaz produit à la sortie du réacteur était de 220°C.
   La température de combustion était de 1250°C. On a refroidi le gaz produit dans un condenseur à eau, où l'on a collecté l'huile de pyrolyse. Le pourcentage total d'huile était de 55% du poids de pneus chargés. La composition de l'huile était la suivante :
   C : 86,42%, en poids
   H : 10,72%,
   O : 0,40%,
   N : 1,22%,
   S : 1,26%.

   Les résidus solides du traitement (en-dehors des morceaux de briques) étaient des segments métalliques de câbles (14% du poids des pneus chargés) une poudre qui contenait de l'oxyde de zinc et du sable (à peu près 9% du poids des pneus chargés) avec une petite quantité (à peu près 3% en poids de poudre) de sulfate de zinc. La teneur en carbone dans la poudre était inférieure à 0,5%.
2°) Identique à l'exemple précédent, mais l'agent de gazéification était un mélange air-vapeur. La teneur en vapeur de l'agent gazéifiant était de 17% en volume. La consommation en air a été la même que dans l'exemple 1, et la cadence de traitement a été de 380 kg/h par m² de section transversale du réacteur.

La température du gaz produit à la sortie du réacteur était de 210°C. La température de combustion était de 1100°C. Le pourcentage total d'huile était de 50% en poids.

## Revendications

1. Procédé pour traiter des déchets combustibles tels que des pneus usagés et des déchets en caoutchouc analogues qui sont au moins en partie constitués de matériaux combustibles, comprenant :
- introduire dans un réacteur une charge comprenant des morceaux de déchets combustibles et des matériaux incombustibles, pour pyrolyser et gazéifier les déchets combustibles,
- établir un flux de gaz à travers la charge en injectant dans le réacteur, par le côté de la charge traitée, un agent gazéifiant contenant de l'oxygène, et en soutirant du réacteur, par le côté où se trouvent les déchets non encore traités, des produits de traitement liquides et gazeux ;
- procédé dans lequel des tronçons successifs de la charge entrent successivement dans des zones de chauffage, de pyrolyse, de cokéfaction, de combustion, et de refroidissement ;
- soutirer du réacteur les produits solides du traitement ;
procédé dans lequel on régule la température maximale dans le réacteur par ajustement d'au moins un paramètre sélectionné parmi le débit d'alimentation en agent gazéifiant, le rapport de masse entre le débit d'alimentation de l'agent gazéifiant et la consommation de la charge, la composition de l'agent gazéifiant, et la composition de la charge, **caractérisé en ce que** la masse des incombustibles dans la charge entrante est réglée entre 2 et 80% en masse, le rapport de masse entre la consommation d'agent gazéifiant par rapport à la consommation de la charge est réglée entre 0,3 et 5,0, et **en ce que** ledit ajustement d'au moins un paramètre se fait dans le sens de maintenir la température maximale dans le réacteur entre 800 et 1700°C tout en maintenant la température des produits gazeux inférieure à 300°C à la sortie du réacteur.

2. Procédé selon la revendication 1, **caractérisé en ce qu'**on maintient la température des produits gazeux à la sortie du réacteur inférieure à 250°C.

3. Procédé selon la revendication 1 ou 2, caractérisé à ce qu'on maintient solidement appuyés les uns contre les autres dans le réacteur les morceaux composant la charge.

4. Procédé selon la revendication 3, **caractérisé en ce qu'**on établit le flux de gaz ascendant sensiblement vertical dans le réacteur et on appuie les morceaux composant la charge les uns contre les autres sous l'action du poids de ces morceaux.

5. Procédé selon l'une quelconque des revendications 1 à 4, **caractérisé en ce qu'**une majeure partie des morceaux est introduite dans le réacteur en ayant une dimension principale comprise entre environ 25 et 300 mm.

6. Procédé selon l'une quelconque des revendications 1 à 5, **caractérisé en ce que** le procédé est mis en oeuvre de façon continue, les déchets combustibles étant successivement chargés par une extrémité du réacteur et les produits solides du traitement successivement déchargés de l'autre extrémité du réacteur sans interrompre le processus.

7. Procédé selon l'une quelconque des revendications 1 à 5, **caractérisé en ce que** le procédé est mis en oeuvre par fournées, les déchets combustibles étant chargés et les produits solides du traitement déchargés pendant que le réacteur est arrêté.

8. Procédé selon la revendication 7, **caractérisé en ce qu'**on charge les déchets combustibles dans le réacteur avec des matériaux incombustibles, avec une quantité accrue de matériaux incombustibles jouxtant une sortie de gaz du réacteur, et on initie le procédé par chauffage des déchets combustibles jouxtant une entrée de gaz du réacteur.

9. Procédé selon l'une quelconque des revendications 1 à 7, **caractérisé en ce qu'**on mélange les déchets combustibles avec un matériau incombustible solide avant d'introduire les déchets combustibles à l'intérieur du réacteur, de sorte que la charge introduite dans le réacteur est un mélange de déchets combustibles et de matériaux incombustibles.

10. Procédé selon l'une quelconque des revendications 1 à 9, **caractérisé en ce que** l'étape d'introduire la charge dans le réacteur comprend l'introduction dans le réacteur, en tant que faisant partie des déchets combustibles, de matériaux contenant des composants incombustibles, en particulier, des câbles métalliques.

11. Procédé selon l'une quelconque des revendications 1 à 10, **caractérisé en ce que** l'on règle la composition de la charge en ajustant la proportion en masse des incombustibles dans la charge.

12. Procédé selon l'une des revendications 1 à 11, **caractérisé en ce qu'**on introduit les matériaux incombustibles dans le réacteur sous la forme de morceaux ou d'objets qui ont majoritairement une dimension principale supérieure à environ 20 mm.

13. Procédé selon l'une quelconque des revendications 1 à 12, **caractérisé en ce qu'**on introduit les matériaux incombustibles solides dans le réacteur sous la forme de morceaux traversés par des trous.

14. Procédé selon l'une quelconque des revendications 1 à 13, **caractérisé en ce qu'**on utilise une fraction des produits solides du traitement comme matériaux incombustibles solides.

15. Procédé selon l'une quelconque des revendications 1 à 14, **caractérisé en ce qu'**on introduit du dioxyde de carbone et/ou de l'eau dans l'agent gazéiifiant.

16. Procédé selon la revendication 15, **caractérisé en ce qu'**on introduit l'eau dans le réacteur par injection dans la zone de combustion et/ou dans la zone de refroidissement où la température des produits solides est supérieure à 400°C.

17. Procédé selon l'une quelconque des revendications 1 à 16, **caractérisé en ce qu'**on règle la composition de l'agent de gazéification en ajustant sa teneur en dioxyde de carbone et/ou en eau.

18. Procédé selon l'une quelconque des revendications 1 à 17, **caractérisé en ce qu'**on introduit dans le réacteur avec la charge, un composant qui réagit chimiquement avec les substances contenant du souffre et/ou du chlore, pour produire des composés qui sont ensuite déchargés avec les produits solides du traitement.

## Claims

1. A method for processing combustible wastes such as scrap tires, and the like rubber wastes which are at least in part made of combustible material, which includes :
- introducing a load comprising pieces of combustible wastes and incombustible materials into a reactor in order to pyrolize and gasify the combustible wastes ;
- establishing a gas flow through said load by injecting a gasifying agent containing oxygen into said reactor, through the side thereof corresponding to the processed load, and by withdrawing gaseous and liquid products of processing from the reactor through the side thereof where the not yet processed wastes are located;
- in which method successive sections of said load, successively enter zones of heating, pyrolysis, coking, combustion, and cooling ;
- and discharging the solid products of processing from the reactor ;
wherein the maximum temperature in the reactor is regulated by controlling at least one parameter selected from : feed rate of gasifying agent, mass ratio of the feed rate of the gasifying agent to consumption of the load, composition of gasifying agent, and composition of said load, **characterized in that** the mass of incombustible materials in the load being introduced is adjusted between 2 and 80% in mass, the mass ratio of the gasifying agent consumption with respect to consumption of the load is adjusted between 0.3 and 5.0, and **in that** said controlling of at least one parameter is made in the sense of keeping the maximum temperature in the reactor within 800 - 1700° C while keeping the temperature of the gaseous products at the reactor outlet below 300° C.

2. A method according to claim 1, **characterized by** maintaining said temperature of the gaseous products at the reactor outlet below 250°C.

3. A method according to claim 1 or 2, **characterized by** maintaining said pieces composing the load solidly abutted against each other in the reactor.

4. A method according to claim 3, **characterized by** establishing the gas flow substantially vertically upwardly in the reactor, and abutting said pieces composing the load against each other under action of the weight of said pieces.

5. A method according to anyone of claims 1-4, **characterized in that** a major quantity of said pieces are introduced into the reactor while having a major dimension between about 25 and 300 mm.

6. A method according to anyone of claims 1-5, **characterized in that** the method is performed continuously, the combustible wastes being successively loaded at one end of the reactor and the solid products of processing successively discharged from the other end of the reactor without interrupting the process.

7. A method according to anyone of claims 1-5, **characterized in that** the method is performed in batches, the combustible wastes being loaded and solid products of processing discharged while the reactor is being shut down.

8. A method according to claim 7, **characterized by** loading said combustible wastes together with incombustible materials in the reactor, with a higher amount of incombustible materials adjacent a gas outlet of the reactor, and initiating the method by heating the combustible wastes adjacent a gas inlet of the reactor.

9. A method according to anyone of claims 1-7, **characterized by** mixing the combustible wastes with a solid incombustible material prior to introducing the combustible wastes into the reactor, whereby said load being introduced into the reactor is a mixture of combustible wastes and incombustible material.

10. A method according to anyone of claims 1-9, **characterized in that** the step of introducing said load into said reactor comprises introducing into the reactor, as part of said combustible wastes, materials containing incombustibles components, in particular, metal cords.

11. A method acording to anyone of claims 1-10, **characterized in that** the composition of said load is controlled by adjusting mass content of incombustibles in said load.

12. A method according to one of claims 1-11, **characterized in that** said incombustible materials are introduced into the reactor in the form of pieces or items that predominantly are over 20 mm in major dimension.

13. A method according to anyone of claims 1-12, **characterized in that** said solid incombustible material is introduced into said reactor in the form of pieces having through holes.

14. A method acording to anyone of claims 1-13, **characterized in that** a fraction of said solid products of processing is used as the solid incombustible material.

15. A method according to anyone of claims 1-14, **characterized in that** carbon dioxyde and/or water are introduced into said gasifying agent.

16. A method according to claim 15, **characterized in that** water is introduced into said reactor by injecting said water into the combustion zone and/or into the cooling zone where the temperature of solids is over 400°C.

17. A method according to anyone of claims 1-16, **characterized in that** the composition of the gasifying agent is controlled by controlling the amount of carbon dioxide and/or water therein.

18. A method according to anyone of claims 1-17, **characterized by** introducing into the reactor with said load a component which chemically reacts with sulfur-and/or chlorine-containing substances, yielding compounds that are then discharged with said solid products of processing.

## Patentansprüche

1. Verfahren zur Behandlung von brennbaren Abfällen wie gebrauchten Reifen und ähnlichen Gummiabfällen, die mindestens teilweise aus brennbaren Materialien bestehen, bestehend aus den folgenden Schritten:
- Einführung einer aus brennbaren Abfallstücken und unbrennbaren Stoffen bestehenden Ladung in einen Reaktor zur Pyrolyse und Vergasung der brennbaren Abfälle,
- Herstellung eines Gasstroms durch die Ladung, indem in den Reaktor auf der Seite der behandelten Ladung ein Sauerstoff enthaltendes Vergasungsmittel eingespritzt wird und aus dem Reaktor auf der Seite, auf der sich die noch nicht behandelten Abfälle befinden, die flüssigen und gasförmigen Produkte der Behandlung abgezogen werden,
- wobei in diesem Verfahren aufeinanderfolgende Abschnitte der Ladung nacheinander in Heiz-, Pyrolyse-,Verkokungs-, Verbrennungs- und Kühlzonen eintreten,
- Abziehen der festen Produkte der Behandlung aus dem Reaktor,
wobei man in diesem Verfahren die Höchsttemperatur im Reaktor durch Einstellung mindestens eines Parameters reguliert, der aus folgenden ausgewählt ist: Durchsatz der Versorgung mit Vergasungsmittel, Masseverhältnis zwischen dem Durchsatz der Vergasungsmittelversorgung und dem Verbrauch der Ladung, Zusammensetzung des Vergasungsmittels und Zusammensetzung der Ladung, **dadurch gekennzeichnet, dass** die Masse der unbrennbaren Stoffe in der eintretenden Ladung auf 2 bis 80% Masseprozent eingestellt wird, das Masseverhältnis zwischen dem Vergasungsmittelverbrauch und dem Verbrauch der Ladung auf 0,3 bis 5,0 eingestellt wird und dass die Einstellung mindestens eines Parameters in dem Sinne stattfindet, dass die Höchsttemperatur im Reaktor zwischen 800 und 1.700°C gehalten wird, wobei gleichzeitig die Temperatur der gasförmigen Produkte bei Austritt aus dem Reaktor unter 300°C gehalten wird.

2. Verfahren nach Anspruch 1, **dadurch gekennzeichnet, dass** man die Temperatur der gasförmigen Produkte bei Austritt aus dem Reaktor unter 250°C hält.

3. Verfahren nach Anspruch 1 oder 2, **dadurch gekennzeichnet, dass** man die die Ladung bildenden Stücke im Reaktor fest aneinander angedrückt hält.

4. Verfahren nach Anspruch 3, **dadurch gekennzeichnet, dass** man den Gasstrom im Reaktor im wesentlichen vertikal aufsteigend herstellt und die die Ladung bildenden Stücke durch Einwirkung ihres Gewichts aneinander drückt.

5. Verfahren nach einem der Ansprüche 1 bis 4, **dadurch gekennzeichnet, dass** der größere Teil der Stücke in den Reaktor eingeführt wird, indem sie eine Hauptabmessung von etwa 25 bis 300 mm besitzen.

6. Verfahren nach einem der Ansprüche 1 bis 5, **dadurch gekennzeichnet, dass** das Verfahren kontinuierlich durchgeführt wird, wobei die brennbaren Abfälle an dem einen Ende des Reaktors eingefüllt und die festen Produkte der Behandlung am anderen Ende des Reaktors ausgetragen werden, ohne Unterbrechung des Prozesses.

7. Verfahren nach einem der Ansprüche 1 bis 5, **dadurch gekennzeichnet, dass** das Verfahren in Chargen durchgeführt wird, wobei die brennbaren Abfälle eingefüllt und die festen Produkte der Behandlung ausgetragen werden, während der Reaktor abgeschaltet ist.

8. Verfahren nach Anspruch 7, **dadurch gekennzeichnet, dass** man die brennbaren Abfälle in den Reaktor mit unbrennbaren Materialien, und zwar mit einer zunehmenden Menge an unbrennbaren Materialien neben einem Gasaustritt des Reaktors, einfüllt und man das Verfahren durch Erhitzung der brennbaren Abfälle neben einem Gaseintritt des Reaktors initiiert.

9. Verfahren nach einem der Ansprüche 1 bis 7, **dadurch gekennzeichnet, dass** man die brennbaren Abfälle mit einem festen unbrennbaren Material mischt, bevor man die brennbaren Abfälle in das Innere des Reaktors einfüllt, so dass die in den Reaktor eingeführte Ladung eine Mischung aus brennbaren Abfällen und unbrennbaren Materialien ist.

10. Verfahren nach einem der Ansprüche 1 bis 9, **dadurch gekennzeichnet, dass** der Schritt der Einführung der Ladung in den Reaktor umfasst, dass in den Reaktor als Teil der brennbaren Abfälle Materialien eingeführt werden, die unbrennbare Komponenten enthalten, insbesondere Metallkabel.

11. Verfahren nach einem der Ansprüche 1 bis 10, **dadurch gekennzeichnet, dass** man die Zusammensetzung der Ladung reguliert, indem man den Masseanteil der unbrennbaren Stoffe in der Ladung einstellt.

12. Verfahren nach einem der Ansprüche 1 bis 11, **dadurch gekennzeichnet, dass** man die unbrennbaren Materialien in den Reaktor in Form von Stücken oder Gegenständen einführt, die mehrheitlich eine Hauptabmessung von mehr als etwa 20 mm haben.

13. Verfahren nach einem der Ansprüche 1 bis 12, **dadurch gekennzeichnet, dass** man die festen unbrennbaren Materialien in den Reaktor in Form von Stücken einführt, die von Löchern durchsetzt sind.

14. Verfahren nach einem der Ansprüche 1 bis 13, **dadurch gekennzeichnet, dass** man eine Fraktion der festen Produkte der Behandlung als feste unbrennbare Materialien verwendet.

15. Verfahren nach einem der Ansprüche 1 bis 14, **dadurch gekennzeichnet, dass** man in das Vergasungsmittel Kohlendioxid und/oder Wasser einführt.

16. Verfahren nach Anspruch 15, **dadurch gekennzeichnet, dass** man in den Reaktor Wasser einführt, und zwar durch Einspritzung in die Verbrennungszone und/oder in die Kühlzone, wo die Temperatur der festen Produkte über 400°C beträgt.

17. Verfahren nach einem der Ansprüche 1 bis 16, **dadurch gekennzeichnet, dass** man die Zusammensetzung des Vergasungsmittels reguliert, indem man seinen Gehalt an Kohlendioxid und/oder Wasser einstellt.

18. Verfahren nach einem der Ansprüche 1 bis 17, **dadurch gekennzeichnet, dass** man in den Reaktor mit der Ladung eine Komponente einführt, die chemisch mit den schwefelund/oder chlorhaltigen Substanzen reagiert, um Verbindungen zu erzeugen, die anschließend mit den festen Produkten der Behandlung ausgetragen werden.
